# EUROPEAN PATENT APPLICATION

(11) **EP 3 041 228 A1**
(43) Date of publication of application: **06.07.2016**
(21) Application number: 14840004.7
(22) Date of filing: 25.08.2014
(51) Int. Cl.: H04N 7/18, B60R 1/00, G06T 1/00

(54) **CAMERA CALIBRATION DEVICE, CAMERA CALIBRATION SYSTEM, AND CAMERA CALIBRATION METHOD**

(30) Priority: 30.08.2013 JP 2013180212
(71) Applicant: Clarion Co., Ltd., Saitama-shi, Saitama 330-0081 (JP)
(72) Inventor: SAKANO, Morihiko, Tokyo 100-8280 (JP); SATO, Keiji, Saitama-shi Saitama 330-0081 (JP)
(74) Representative: MERH-IP Matias Erny Reichl Hoffmann Patentanwälte PartG mbB
(86) International application number: PCT/JP2014/072119
(87) International publication number: WO 2015/029934

(57) **Abstract**

Provided are a camera calibration device and a camera calibration system that can significantly reduce a burden on an operator associated with transport of calibration patterns or an operation of arranging calibration patterns in a calibration operation, and can significantly reduce the storage place for the calibration patterns. The device or system includes an image conversion unit 141 that converts an image captured by each camera based on a projection matrix for conversion into a bird's-eye viewpoint based on the initial parameters of each camera, thereby generating a converted image; an error evaluation unit 142 that calculates an error between a converted image of a reference camera selected from among the plurality of cameras and a converted image of a camera other than the reference camera; a projection matrix updating unit 143 that updates the projection matrix based on the error so that images of a common imaging area captured by the respective cameras match; and a camera parameter calculation unit 145 that calculates camera parameters including an external parameter related to the posture of each of the cameras with respect to the ground based on the updated projection matrix.

## Description

### Technical Field

The present invention relates to a camera calibration device, a camera calibration system, and a camera calibration method.

### Background Art

Conventionally, there is known a device that, in order to improve the visibility in backing a vehicle, for example, displays an image of an area behind the vehicle, which is captured with an on-vehicle camera, on an on-vehicle monitor and thus allows a circumstance around an area behind the vehicle, which is a blind area for a driver, to be viewed as an image displayed on the on-vehicle monitor.

In such a device, in order to properly calibrate an image displayed on the on-vehicle monitor, a calibration index is arranged behind the vehicle, and the installation state of the on-vehicle camera is adjusted while an image of the calibration index displayed on the on-vehicle monitor is checked so that the image of the calibration index is properly displayed on the on-vehicle monitor. The image obtained from the on-vehicle camera is subjected to a predetermined computation process based on the image of the calibration index so that the image displayed on the on-vehicle monitor is properly calibrated.

In recent years, in order to allow a driver and the like to view a circumstance of an area around a vehicle, a device has been put into practical use that captures images of the entire area around the vehicle using a plurality of on-vehicle cameras, converts the plurality of images obtained from the respective on-vehicle cameras into images seen from right above the vehicle (i.e., bird's-eye images), and performs mapping while adjusting the relative positions of the images, thereby obtaining a single viewpoint-converted composite image.

In such a device, it is necessary to elaborately adjust the relative positions of two adjacent images, for example. Thus, a highly precise calibration technique is demanded.

By the way, in the conventional calibration methods, it has been necessary to strictly define the relative positional relationship between a calibration index and a vehicle. To that end, it has been necessary to place a vehicle at a predetermined position first, and then elaborately arrange a calibration index with respect to the vehicle, or arrange a calibration index at a predetermined position first, and then elaborately place a vehicle with respect to the calibration index. Therefore, on the vehicle production line, for example, in order to improve the position adjustment accuracy for a vehicle and a calibration index, it has been necessary to modify equipment at a huge expense. Further, when calibration is performed again in a maintenance division of a sales and service company after a vehicle has been once shipped from a production site (i.e., when a vehicle is repaired or retrofitted with an on-vehicle camera), for example, it has been necessary to elaborately arrange a calibration index with respect to the vehicle each time. Thus, the calibration operation process becomes complex, which is problematic.

In response to such a problem, Patent Literature 1 discloses a camera calibration apparatus that can simplify the setting-up of a calibration environment.

In the camera calibration apparatus disclosed in Patent Literature 1, a parameter deriver, which is adapted to find parameters for projecting images captured with N cameras onto a predetermined surface and merging the images together, find the parameters based on the results of imaging calibration patterns arranged in each common imaging area with the corresponding cameras. The calibration patterns are arranged separate from one another.

### Citation List

### Patent Literature

Patent Literature 1: JP 2008-187566 A

### Summary of Invention

### Technical Problem

According to the camera calibration apparatus disclosed in Patent Literature 1, as the results of imaging calibration patterns arranged in each common imaging area are used, it is possible to adjust the relative positions of images of a plurality of cameras that share the common imaging area, and thus derive parameters for merging the captured images together. Further, as the calibration patterns are arranged separate from one another, the setting-up of a calibration environment can be simplified.

However, in the camera calibration apparatus disclosed in Patent Literature 1, as it is necessary to use the results of imaging calibration patterns arranged in each common imaging area, if the camera calibration apparatus is applied to a large vehicle such as a bus, truck, or a large construction machine, for example, each camera is usually installed at a high level, and calibration patterns that are contained in each image become smaller correspondingly. Thus, it becomes difficult to elaborately set the positions of feature points (i.e., calibration patterns) on the image. Therefore, it is necessary to prepare calibration patterns with a size corresponding to the frame of a vehicle. For example, for a large vehicle such as a construction machine, it is necessary to prepare calibration patterns with a size of about 1 to 3 meters. However, when the size of the calibration patterns is increased as described above, problems can occur such that it becomes difficult for an operator to transport the calibration patterns or perform an operation of arranging the calibration patterns in a calibration operation, or it becomes necessary to prepare a large storage place for the calibration patterns.

The present invention has been made in view of the foregoing problems, and it is an object of the present invention to provide a camera calibration device, a camera calibration system, and a camera calibration method that can significantly reduce a burden on an operator associated with transport of calibration patterns or an operation of arranging calibration patterns in a calibration operation, and can significantly reduce the size of the storage place for the calibration patterns.

### Solution to Problem

In order to solve the aforementioned problems, the camera calibration device in accordance with the present invention is a camera calibration device for calibrating images captured by a plurality of cameras that have a common imaging area in which at least two calibration patterns are arranged, and includes an image conversion unit configured to convert an image captured by each camera based on a projection matrix for conversion into a bird's-eye viewpoint based on the initial parameters of each camera, thereby generating a converted image; an error evaluation unit configured to calculate an error between a converted image of a reference camera selected from among the plurality of cameras and a converted image of a camera other than the reference camera; a projection matrix updating unit configured to update the projection matrix based on the error so that images of the common imaging area captured by the respective cameras match; and a camera parameter calculation unit configured to calculate camera parameters including an external parameter related to the posture of each of the cameras with respect to the ground based on the updated projection matrix.

The camera calibration system in accordance with the present invention includes the aforementioned camera calibration device; a plurality of cameras that have a common imaging area; a composite image generation device configured to calibrate images captured by the plurality of cameras using camera parameters of the respective cameras obtained from the camera calibration device, thereby generating a composite image; and a display device configured to display the composite image.

The camera calibration method in accordance with the present invention is a camera calibration method for calibrating images captured by a plurality of cameras that have a common imaging area in which at least two calibration patterns are arranged, and includes converting an image captured by each camera based on a projection matrix for conversion into a bird's-eye viewpoint based on the initial parameters of each camera, thereby generating a converted image; calculating an error between a converted image of a reference camera selected from among the plurality of cameras and a converted image of a camera other than the reference camera; updating the projection matrix based on the error so that images of the common imaging area captured by the respective cameras match; and calculating camera parameters including an external parameter related to the posture of each of the cameras with respect to the ground based on the updated projection matrix.

### Advantageous Effects of Invention

According to the present invention, it is possible to eliminate the need to use the arrangement relationship of feature points, such as calibration patterns, in a common imaging area in calibration of camera images, and thus minimize the number and the dimensions of calibration patterns that are required. Thus, it is possible to significantly reduce a burden on an operator associated with transport of calibration patterns or an operation of arranging calibration patterns in a calibration operation, and can significantly reduce the size of the storage place for the calibration patterns used for the calibration operation.

Other problems, configurations, and advantageous effects will become apparent from the following description of embodiments.

### Brief Description of Drawings

Fig. 1 is an entire configuration diagram showing the entire configuration of an embodiment of a camera calibration system in accordance with the present invention.
Fig. 2 is a top view schematically showing the installation position and the imaging area of each camera.
Fig. 3 is a view illustrating a computation process for calibrating cameras performed by the camera calibration device shown in Fig. 1, which is a top view schematically showing a vehicle, which is arranged as a calibration target, and calibration patterns.
Fig. 4 is a basic configuration diagram showing the basic configuration of the camera calibration device shown in Fig. 1.
Fig. 5 is a flow chart illustrating a camera calibration method performed by the camera calibration system shown in Fig. 1.

### Description of Embodiments

Hereinafter, embodiments of a camera calibration device and a camera calibration system in accordance with the present invention will be described with reference to the drawings. Although a case will be mainly described below where calibration is performed on images captured with on-vehicle cameras that are mounted on a vehicle, the camera calibration device and the camera calibration method in this embodiment can also be applied to a case where calibration is performed on images captured with a plurality of cameras that are mounted on an object other than a vehicle. In addition, although a case where four cameras are used and two adjacent cameras share a common imaging area will be described below, the number of cameras in the whole system as well as the number of cameras that capture images of a common imaging area can be changed as appropriate in accordance with a user's request and the like. In addition, as described below, calibration can also be performed without using a calibration target. For example, calibration can be performed using a feature object that is present in a common imaging area without using a calibration target.

### <Embodiment of camera calibration system>

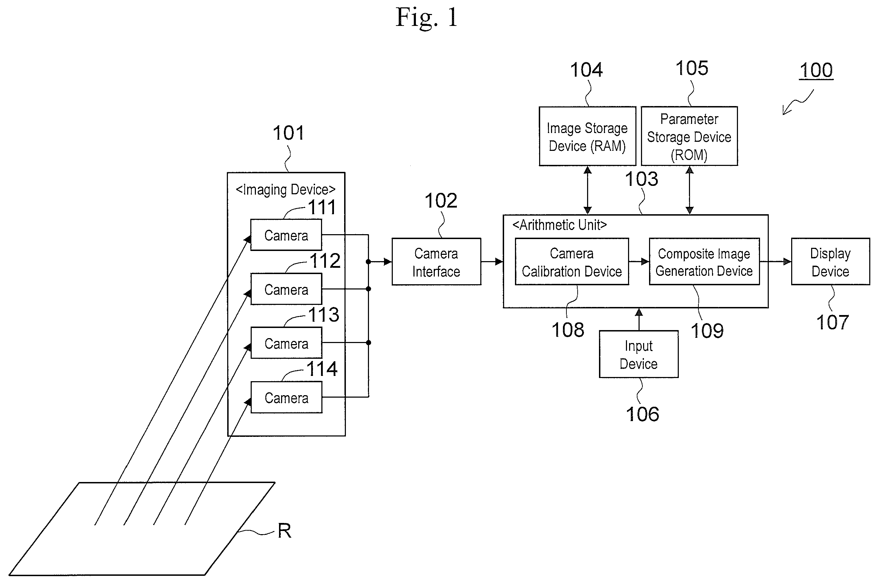

Fig. 1 shows the entire configuration of an embodiment of a camera calibration system in accordance with the present invention. A camera calibration system 100 shown in Fig. 1 mainly includes an imaging device 101 having four cameras 111 to 114; a camera interface 102; an image storage device (RAM) 104; a parameter storage device (ROM) 105; an input device 106; an arithmetic unit 103 having a camera calibration device 108 and a composite image generation device 109; and a display device 107.

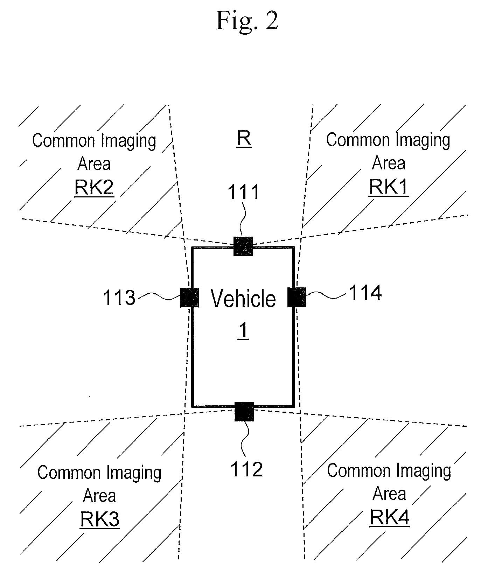

As shown in Fig. 2, the cameras 111 to 114 of the imaging device 101 are arranged on the front, rear, right, and left parts of a vehicle 1, respectively, for example, so that images of areas around the vehicle 1, including a calibration target R, are captured by the four cameras 111 to 114.

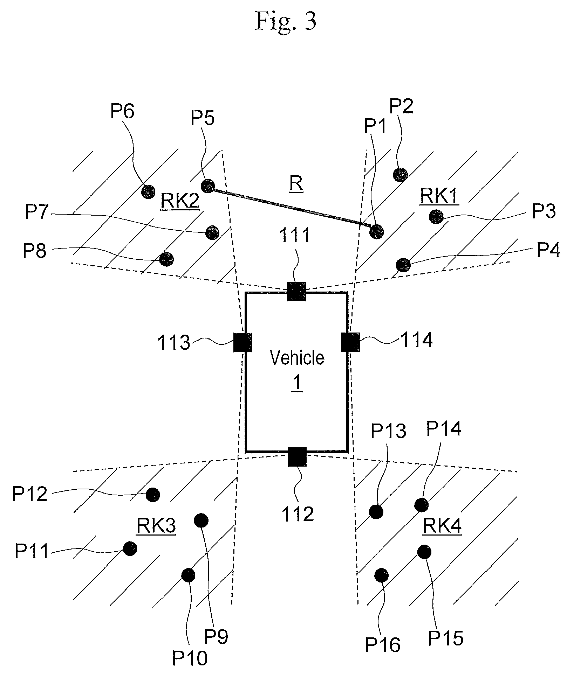

The calibration target R includes information that is necessary for calibration of the cameras, such as calibration patterns (see Fig. 3) that serve as calibration indices (described below), for example. In calibration of camera images, the cameras 111 to 114 capture images of the calibration target R, and transmit the captured images to the arithmetic unit 103 via the camera interface 102. It should be noted that the dotted line in Fig. 2 represents an imaging area of each of the cameras 111 to 114. In order to elaborately calibrate camera images, adjacent cameras have an overlapped portion, that is, a common area (hereinafter referred to as a "common imaging area") RK1 to RK4 imaged by the two cameras. The arithmetic unit 103 calculates camera parameters for calibrating images captured by the cameras 111 to 114, using the camera calibration device 108.

After camera parameters are calculated by the camera calibration device 108, the camera parameters are transmitted to the composite image generation device 109. In addition, images captured by the cameras 111 to 114 are transmitted to the arithmetic unit 103 via the camera interface 102, and are subjected to viewpoint conversion and synthesis by the composite image generation device 109 of the arithmetic unit 103 using the camera parameters, and then, the resulting image is transmitted to the display device 107, and is presented as an image seen from right above the vehicle 1 (i.e., bird's-eye image) to a user or the like via the display device 107. It should be noted that this embodiment is based on the assumption that a bird's-eye image of an area around the vehicle 1 is generated through viewpoint conversion and synthesis of images obtained from the cameras 111 to 114. Thus, a camera that can capture an image at wide angles, such as a fish-eye camera, is desirably adopted as each of the cameras 111 to 114.

The camera interface 102 properly samples image signals transmitted from the cameras 111 to 114, and transmits the image signals to the arithmetic unit 103 as described above.

The image storage device (RAM) 104 stores images captured by the cameras 111 to 114 and results of a variety of computations performed by the arithmetic unit 103.

The parameter storage device (ROM) 105 has written thereto, for example, information, which is necessary for calibration of camera images, on camera parameters (i.e., initial camera parameter values), such as design values related to the installation positions and the postures (i.e., installation angles) of the cameras 111 to 114 (which are called "external parameters"), and design values related to the focal lengths, the pixel sizes, the centers of the optical axes, and distortion functions of the cameras 111 to 114 (which are called "internal parameters").

The input device 106 receives input information, such as information that is necessary for calibration of the cameras, based on a user operation or the like, and transmits the input information to the arithmetic unit 103.

The arithmetic unit 103 operates in conjunction with the camera interface 102, the image storage device (RAM) 104, the parameter storage device (ROM) 105, the input device 106, the display device 107, and the like to perform a variety of computations including the aforementioned computations performed in calibration of camera images. Specifically, the arithmetic unit 103 stores image signals transmitted from the camera interface 102 into the image storage device 104, and reads the initial camera parameter values stored in the parameter storage device 105 and the images stored in the image storage device 104 to perform viewpoint conversion and synthesis on the images (i.e., the composite image generation device 109), or performs a process of displaying a viewpoint-converted composite image on the display device 107, for example. In addition, the arithmetic unit 103 performs calibration computation for calculating the installation position and the installation posture of each camera so that a bird's-eye image generated through viewpoint conversion and synthesis becomes an image seen from right above the vehicle 1 (i.e., the camera calibration device 108), or performs a process of using input information that is received on the input device 106 from a user or the like for the calibration computation. It should be noted that the computation process for calibrating camera images is described below.

The display device 107 displays images obtained from the cameras 111 to 114 based on an instruction transmitted from the arithmetic unit 103. For example, the display device 107 displays and presents the images to a user or the like without converting only the image of the camera 112 that faces rearward in accordance with an instruction transmitted from the arithmetic unit 103, or displays a bird's-eye image generated through viewpoint conversion and synthesis of the images obtained from the cameras 111 to 114.

### <Embodiment of camera calibration device>

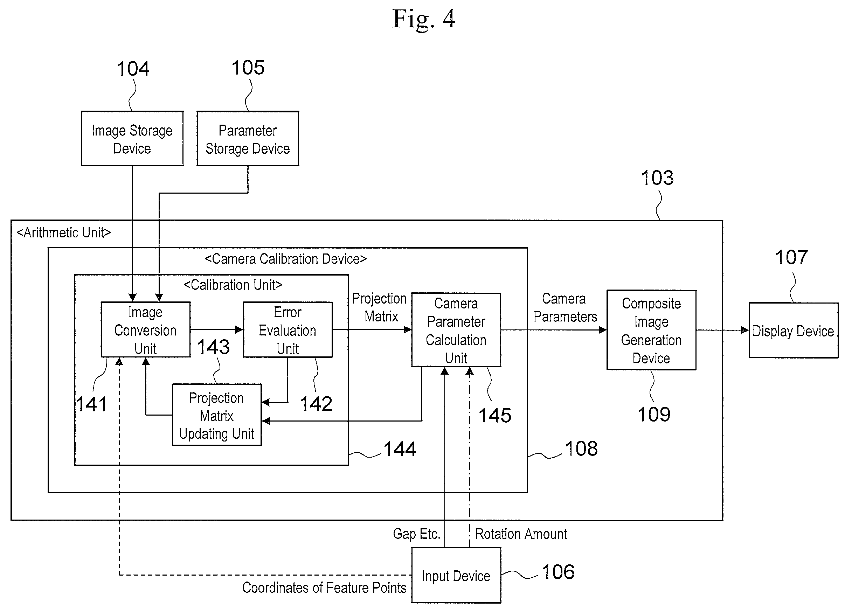

Next, a computation process for calibrating camera images performed by the camera calibration device 108 of the arithmetic unit 103 shown in Fig. 1 (i.e., an embodiment of the camera calibration device in accordance with the present invention), that is, a process of computing the camera parameters of each of the cameras 111 to 114 performed by the camera calibration device 108 will be described in detail with reference to Figs. 3 and 4.

As shown in Fig. 3, the vehicle 1 is placed in a calibration target R that is used for a computation process for calibrating camera images performed by the camera calibration device 108, while calibration patterns P1 to P16, which are calibration indices, are arranged at least in common imaging areas RK1 to RK4 of adjacent cameras around the vehicle 1. Each of the calibration patterns P1 to P16 is formed of a plate that has a plane and is in the shape of a disc or a polygon such as a square, for example, and has about a size that can be, when imaged by each of the cameras 111 to 114, viewed on the image. It should be noted that the shape of each of the calibration patterns P1 to P16 can be adequately selected as long as, when each calibration pattern is formed of a disc-shaped plate, a landmark portion for uniquely identifying the calibration pattern is provided in the center of the plate, or, when each calibration pattern is formed of a square plate, a landmark portion for uniquely identifying the calibration pattern is provided in a corner of the plate. In addition, calibration patterns in each common imaging area may have either the same shape or different shapes.

In the embodiment shown in Fig. 3, four calibration patterns P1 to P4 are arranged in a common imaging area RK1 of the cameras 111 and 114, four calibration patterns P5 to P8 are arranged in a common imaging area RK2 of the cameras 111 and 113, four calibration patterns P9 to P12 are arranged in a common imaging area RK3 of the cameras 113 and 112, and four calibration patterns P13 to P16 are arranged in a common imaging area RK4 of the cameras 112 and 114. Such calibration patterns can be arranged at any positions in each common imaging area. However, the gap between adjacent calibration patterns is desirably large. In addition, the number of calibration patterns that are arranged in each common imaging area can be changed as appropriate in accordance with the calibration accuracy, for example.

The more the calibration patterns, the higher the calibration accuracy. However, calibration patterns are auxiliary calibration indices that are used in calibration of camera images. That is, calibration of camera images is possible as long as texture patterns are drawn on the background plane, in principle, even if there are no points like calibration patterns.

However, at least two (e.g., P1 and P5 in Fig. 3) of the 16 calibration patterns shown in this embodiment are necessary to uniquely define the heights of the cameras. The gap between the two calibration patterns is measured by an operator or the like and is input to a camera parameter calculation unit 145 via the input device 106 in advance.

Specifically, the gap between two calibration patterns input by an operator or the like is used to determine the distance corresponding to one pixel. Calibration is performed for a plurality of cameras. After a bird's-eye viewpoint image is generated with the distance corresponding to one pixel unknown, the distance between two calibration patterns input by an operator or the like is used to calculate the distance or scale corresponding to the size of one pixel, so that a final bird's-eye image is generated.

When there is only one calibration pattern, it is possible to perform calibration up until generation of a bird's-eye viewpoint image. However, as it is impossible to determine the actual distance (mm) corresponding to the size of one pixel of an image, such a case is not tolerated.

The aforementioned calibration patterns may be arranged at any positions as long as the calibration patterns can be imaged by any of the four cameras. However, the calibration patterns are desirably arranged in a common imaging area. This is because in this embodiment, calibration is performed through position adjustment of two captured images of each common imaging area, and thus, if calibration patterns are arranged in each common imaging area, the calibration patterns can be used as landmarks in performing position adjustment of two images. That is, position adjustment of images becomes easier with a larger number of landmarks for position adjustment of images. Thus, the number of calibration patterns that are arranged in each common imaging area is desirably large.

However, even when such landmarks are not provided, if texture patterns are contained in images of each common imaging area, position adjustment of the images is possible using information on the luminance of the texture patterns, for example. Thus, calibration patterns are not necessarily required for each common imaging area. Thus, as long as two calibration patterns are arranged in the range of an area that is imaged by any of the four cameras, even a case where no calibration pattern is arranged in any of the four common imaging areas is tolerated.

It should be noted that even when calibration indices arranged for calibration purposes are not provided, if an object (i.e., feature object) having points that can be used for calibration (i.e., feature points) is present in a common imaging area, calibration can be performed using the feature points of such object. Such object may be not only a three-dimensional object but also a plane such as a pattern or a texture, for example, sandy soil or asphalt. When calibration is performed using feature points of an object that is present in a common imaging area, it is necessary to determine if the object is contained in the target common imaging area. As a method for determining if an object is contained in a common imaging area, it is possible to use a standard deviation of luminance values in the common imaging area, for example. For example, if the calculated value of the standard deviation is greater than or equal to a predetermined threshold, it can be determined that an object with feature points that can be used for calibration is present, while if the value of the calculated standard deviation is less than the threshold, it can be determined that such an object is not present. If it is determined that such an object is not present, calibration patterns are necessary. Thus, information to the effect that calibration patterns should be arranged is sent to an operator via the display device 107.

The aforementioned computation process for calibrating camera images performed by the camera calibration device 108 using the calibration target R is performed using a projection matrix related to the ground (i.e., plane). Herein, two camera images corresponding to a given common imaging area contain the same ground (i.e., plane). As a target to be imaged is a plane, one of the two images can be converted into the same image as the other image (i.e., an image seen from the viewpoint of one camera can be converted into an image seen from the viewpoint of the other camera) through geometric conversion using a projection matrix. The "projection matrix" herein is a matrix that represents the projection relationship between planes that are contained in two camera images corresponding to a given common imaging area, and the projection matrix includes relative external parameters of the two cameras and a normal vector to the plane in each image. Using singular value decomposition for the projection matrix can extract the relative external parameters of the two cameras and the normal vector to the plane. It should be noted that as singular value decomposition for a projection matrix is a known technique, the detailed description thereof will be omitted. If a normal vector to a plane of each camera is known, it becomes possible to convert each camera image into a bird's-eye image seen from right above the vehicle 1, while if the relative external parameters of the two cameras are known, it becomes possible to combine bird's-eye images of the two cameras corresponding to a common imaging area without deviation, and thus form a composite image.

A projection matrix that is used for a computation process for calibrating camera images is calculated based on an iterative method, for example. The iterative method is a method for repeating the procedures of determining the current error and updating a projection matrix such that the error becomes smaller. Examples include a method based on differentiation, such as a method of steepest descent, a Gauss-Newton method, or a Levenberg-Marquardt Method, and a method without differentiation, such as a particle filter or a genetic algorithm. Among them, the method of steepest descent is a method for repeating the procedures of differentiating an error function to determine the decreasing direction of the error function, and updating the parameter slightly in the decreasing direction, until a decrease of the error stops.

Meanwhile, the camera calibration device 108 includes, as shown in Fig. 4, a calibration unit 144 having an image conversion unit 141, an error evaluation unit 142, and a projection matrix updating unit 143; and the camera parameter calculation unit 145 to estimate camera parameters for generating a bird's-eye image without deviation.

The calibration unit 144 is adapted to calculate a projection matrix for two cameras corresponding to each common imaging area, and performs an image conversion process with the image conversion unit 141, an error evaluation process with the error evaluation unit 142, and an updating process with the projection matrix updating unit 143 on each of two images corresponding to each of the four common imaging areas RK1 to RK4. That is, the calibration unit 144 performs an image conversion process with the image conversion unit 141, an error evaluation process with the error evaluation unit 142, and an updating process with the projection matrix updating unit 143 on each of two images of the cameras 111 and 114 corresponding to the common imaging area RK1, two images of the cameras 111 and 113 corresponding to the common imaging area RK2, two images of the cameras 112 and 113 corresponding to the common imaging area RK3, and two images of the cameras 112 and 114 corresponding to the common imaging area RK4.

More specifically, the image conversion unit 141 of the calibration unit 144 receives images of the cameras 111 to 114 from the image storage unit 104, and converts the viewpoints of two images corresponding to each common imaging area using a projection matrix obtained by the projection matrix updating unit 143, and then transmits the viewpoint-converted images to the error evaluation unit 142. The projection matrix used for the viewpoint conversion herein is a matrix for, when processing images of the two cameras 111 and 114 corresponding to the common imaging area RK1, for example, performing conversion for matching an image of the ground (i.e., plane) including the calibration patterns P1 to P4 captured by the camera 114 with an image of the ground including the calibration patterns P1 to P4 captured by the camera 111. It should be noted that the two images do not become perfectly matching images even when the projection matrix is used as the two images inevitably contain errors. However, the image of the camera 114 becomes closer to the image of the camera 111.

It should be noted that in the image conversion process of the image conversion unit 141 in the initial calibration, a projection matrix cannot be obtained from the projection matrix updating unit 143. Therefore, image conversion is performed after calculating a projection matrix (i.e., initial projection matrix) for performing conversion for matching images of the ground (i.e., plane), which have been captured by two cameras corresponding to each common shooing area, with each other based on the design values (initial parameters) related to the postures of the cameras 111 to 114 stored in the parameter storage unit 105 in advance. Then, in the second and subsequent image conversion processes for calibration, the viewpoints of images of the two cameras corresponding to each common imaging area are converted using the projection matrix obtained by the projection matrix updating unit 143.

In this embodiment, four calibration patterns are arranged in each common imaging area as the feature points of a calibration target. When four calibration patterns, which serve as calibration indices, are arranged in each common imaging area as described above, it is possible to, by solving simultaneous equations created for the four calibration patterns in images captured by two cameras corresponding to each common imaging area, uniquely determine a projection matrix for converting the coordinate positions of the four calibration patterns in one camera image into the coordinate positions of the four calibration patterns in the other camera image. That is, when four or more calibration patterns are arranged in each common imaging area, the image conversion unit 141 can perform image conversion using a projection matrix, which has been obtained from simultaneous equations created for the four or more calibration patterns, as an initial projection matrix used in the initial image conversion process of the image conversion unit 141.

The error evaluation unit 142 evaluates an error between two camera images corresponding to each common imaging area, which have been subjected to image conversion by the image conversion unit 141, and transmits the error between the two camera images to the projection matrix updating unit 143. For example, when images of the two cameras 111 and 114 corresponding to the common imaging area RK1 are processed, the image of the camera 114 is converted such that it matches the image of the camera 111 by the image conversion unit 141. However, in the initial image conversion process by the image conversion unit 141, for example, the image is converted based on the design values stored in the parameter storage unit 105 in advance. Thus, the image of the camera 114 does not perfectly match the image of the camera 111 even if image conversion based on the design values is performed based on the actual installation errors of the cameras and the like. Thus, an error inevitably occurs between the two images. The error evaluation unit 142 evaluates the amount of such error between the two camera images. It should be noted that the error evaluation unit 142 transmits a projection matrix output from the image conversion unit 141 to the camera parameter calculation unit 145.

Examples of the amount of an error between two camera images that is evaluated by the error evaluation unit 142 include the sum of squares of the distance between corresponding calibration patterns, the sum of squares of the luminance difference between corresponding pixels, and the total sum of the sum of squares of the distance and the sum of squares of the luminance difference.

It should be noted that when calibration is performed using an object that is present in a common imaging area without calibration indices arranged for calibration purposes, the difference between the feature quantities of the object in the corresponding pixels of the common imaging area is determined to be the amount of an error. The feature quantity of an object is desirably the one that is not susceptible to the influence of the difference in sensitivity or the difference in the amount of incident light between cameras. For example, a feature quantity in the edge direction is used. A feature quantity in the edge direction represents the direction in which the luminance locally increases in each pixel. A feature object can be determined based on a distribution of feature quantities in the edge direction in an image or on statistics (e.g., mean value) of the feature quantities in the edge direction of each object. When the same object is imaged using cameras that capture images of a common imaging area, feature quantities in the corresponding pixels ideally match. Thus, a projection matrix for two images can be determined by using the matching degree of such feature quantities as an error function and performing optimization so that an error becomes minimum.

The projection matrix updating unit 143, based on the error obtained by the error evaluation unit 142 and the pre-updated projection matrix transmitted from the calibration unit 144 to the camera parameter calculation unit 145, updates the projection matrix using an iterative method so that the error becomes smaller, and transmits the updated projection matrix to the image conversion unit 141. For example, the projection matrix updating unit 143 updates the projection matrix by determining partial differentiation of an error function of the current camera parameters, and slightly updating the camera parameters in the opposite direction to the direction of a vector represented by the partial differentiation of the error function.

As described above, in calibration of camera images, the calibration unit 144 calculates a projection matrix for performing conversion so that two camera images corresponding to each common imaging area become the same (i.e., an error becomes zero) by repeatedly performing an image conversion process with the image conversion unit 141, an error evaluation process with the error evaluation unit 142, and an updating process with the projection matrix updating unit 143 on each of the two camera images corresponding to each common imaging area, and transmits the calculation results to the camera parameter calculation unit 145.

The camera parameter calculation unit 145 decomposes the projection matrixes corresponding to the four cameras 111 to 114 obtained by the calibration unit 144, using singular value decomposition or the like, and extracts a normal vector to the ground (i.e., plane) and relative external parameters of the cameras, and then transmits camera parameters calculated from the relative external parameters of the cameras (in particular, external parameters related to the postures of the cameras with respect to the plane (i.e., ground)) to the composite image generation device 109. Specifically, as the relative external parameters of the cameras are obtained in the forms of a relative external parameter of the camera 114 with respect to the camera 111, a relative external parameter of the camera 113 with respect to the camera 111, a relative external parameter of the camera 112 with respect to the camera 114, and a relative external parameter of the camera 112 with respect to the camera 113, such relative external parameters are re-calculated to become relative external parameters with respect to a camera, which serves as a reference (i.e., reference camera), selected from among the cameras 111 to 114, and also, the posture of the reference camera with respect to the plane (i.e., ground) is calculated from the normal vector to the plane (i.e., ground). Accordingly, external parameters related to the postures of all cameras with respect to the plane (i.e., ground) are calculated. It should be noted that the camera parameter calculation unit 145 may also estimate internal parameters related to the focal lengths, the pixel sizes, the centers of the optical axes, and distortion functions of the respective cameras, for example, as needed.

The camera parameters output from the camera parameter calculation unit 145 are used to create a mapping table for generating a bird's-eye image with the composite image generation device 109. The "mapping table" herein is a table containing the correspondence between each pixel in a composite bird's-eye image and a pixel in each of the images of the cameras 111 to 114. Performing mapping of luminance values based on such correspondence can obtain a final composite bird's-eye image.

As described above, according to the camera calibration device 108 in this embodiment, images captured with cameras are calibrated with respect to each other using a projection matrix related to the ground (i.e., plane). Thus, it is possible to eliminate the need to use the arrangement relationship of feature points, such as calibration patterns, in a common imaging area in calibration of camera images, and thus minimize the number and the dimensions of calibration patterns that are required. Thus, it is possible to significantly reduce a burden on an operator associated with transport of calibration patterns or an operation of arranging calibration patterns in a calibration operation, and can significantly reduce the size of the storage place for the calibration patterns used for the calibration operation.

It should be noted that when images captured with cameras are calibrated with respect to each other, a projection matrix is determined for performing viewpoint conversion into a bird's-eye viewpoint such that the captured images containing calibration patterns, which are calibration indices, match between cameras corresponding to a common imaging area. In that case, a projection matrix that satisfies a condition that two camera images corresponding to a common imaging area should match is determined. However, if texture information is insufficient, it may be impossible to perform sufficient position adjustment only with the condition that two camera images corresponding to a common imaging area should match. In such a case, a calibration target, in particular, feature points in a common imaging area that are contained in the calibration target are extracted, and the coordinates of the extracted feature points are input to the image conversion unit 141 of the calibration unit 144, and then, a projection matrix for performing viewpoint conversion is determined by adding a condition that the coordinates of the feature points should match, so that the calculation accuracy of the projection matrix can be improved. It should be noted that the coordinates of the feature points may be extracted through image recognition, or alternatively, an image may be presented to a user or the like via the display device 107 or the like so that the user or the like may specify the coordinates of the feature points on the image via the input device 106 such as a mouse.

Information obtained by the camera calibration device 108 in this embodiment is the camera posture of each of the cameras with respect to the plane (i.e., ground), and the relationship of the relative positions and postures of the cameras. Therefore, it is, in principle, impossible to determine the relative rotation amount of the vehicle 1 with respect to the ground (i.e., the rotation amount of the vehicle 1 in the yaw direction). However, when an error of the initial installation position(s) of a camera(s) is small, the relative rotation amount of the vehicle 1 with respect to the ground can be estimated from the direction of the axle of the vehicle 1 by using information on the installation position of the cameras. In contrast, when an error of the initial installation position(s) of a camera(s) is estimated to be large, it is difficult to estimate the relative rotation amount of the vehicle 1 with respect to the ground from information on the installation position of the cameras. In such a case, the relative rotation amount of the vehicle 1 with respect to the ground can be estimated by arranging landmarks for recognizing the relationship between the ground and the vehicle 1 around the vehicle 1 (i.e., arranging bars in parallel with the vehicle 1), and providing a means for correcting the relative rotation amount of the vehicle 1 with respect to the ground. It is also possible to, for example, present an image to a user or the like via the display device 107 or the like so that the user or the like may input a rotation amount (i.e., information input shown by the chain line in Fig. 4) through fine adjustment via the input device 106 so that landmarks for recognizing the relationship between the ground and the vehicle 1 have predetermined looks. In such a case, the input results are promptly reflected by the image. Thus, the user or the like can adjust the relative rotation amount of the vehicle 1 with respect to the ground while checking the image.

### <Embodiment of camera calibration method>

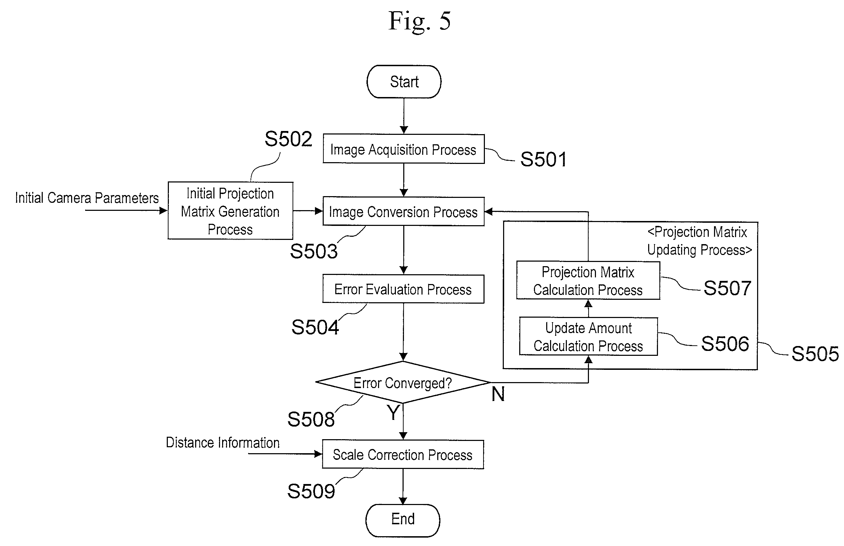

Hereinafter, a flow of a computation process for calibrating camera images will be described with reference to Fig. 5. As a computation process for calibrating camera images performed by the camera calibration device 108 of the arithmetic unit 103 shown in Fig. 1 (i.e., an embodiment of the camera calibration device in accordance with the present invention), that is, as a process of computing the camera parameters of each of the cameras 111 to 114 of the camera calibration device 108, the flow of the calibration computation process includes an image acquisition process S501, an initial projection matrix generation process S502, an image conversion process S503, an error evaluation process S504, a projection matrix updating process S505, a convergence determination process S508, and a scale correction process S509. The projection matrix updating process S505 includes an update amount calculation process 506 and a projection matrix calculation process 507. In the initial calibration, the image acquisition process S501, the image conversion process S503, the error evaluation process S504, the convergence determination process S508, and the projection matrix updating process S505 are sequentially performed. Thereafter, the image conversion process S503, the error evaluation process S504, the convergence determination process S508, and the projection matrix updating process S505 are repeatedly performed. When an error evaluation value is evaluated and is determined to have converged in the convergence determination process S508, the process stops.

First, the image acquisition process S501 is performed to read an image captured by each camera from the image storage device 104. In this embodiment, four images corresponding to four cameras, which have captured images of the ground including calibration patterns, for example, are input.

Next, the images acquired in the image acquisition process S501 are subjected to the image conversion process S503 by the image conversion unit 141 shown in Fig. 4. The image conversion process S503 is performed using a projection matrix. Herein, a projection matrix in the initial calibration is calculated in the initial projection matrix generation process S502, and in the initial projection matrix generation process S502, initial camera parameters including the camera postures and positions are received from the parameter storage unit 105, so that a projection matrix corresponding to the initial camera parameters is calculated. The obtained initial projection matrix is used in the initial process of the image conversion process S503, and in the following process of the image conversion process S503, a projection matrix output in the projection matrix updating process S505 is used.

Next, the error evaluation process S504 is performed by the error evaluation unit 142 shown in Fig. 4. In the error evaluation process S504, outputs of the image conversion process S503 are received so as to calculate the amount of an error that represents how much one of the two camera images corresponding to each common imaging area portion deviates from the other camera image corresponding to the common imaging area portion, and output the calculation results.

Next, the amount of an error output in the error evaluation process S504 is compared with a predetermined determination threshold to execute the convergence determination process S508. In the convergence determination process S508, if the amount of an error output in the error evaluation process S504 has converged is determined. If the error is not determined to have converged, the projection matrix updating process S505 is performed by the projection matrix updating unit 143 shown in Fig. 4. The projection matrix updating process S505 includes the update amount calculation process 506 and the projection matrix calculation process 507. In the update amount calculation process 506, the amount of update to be applied to a camera parameter, such as a camera posture or position, is calculated. The "amount of update" herein is the amount of fine modification to be applied to a camera parameter, such as a camera posture or position, so that the amount of an error, which represents how much one of the two images corresponding to each common imaging area portion matches the other image corresponding to the common imaging area portion, becomes smaller. Specifically, the amount of update can be calculated by determining partial differentiation of an error function of the current camera parameters. In the update amount calculation process 506, the value of the finely modified camera parameter is output. In the projection matrix calculation process 507, the output value in the update amount calculation process 506 is received so that a projection matrix corresponding to the camera parameter is calculated and output.

In this embodiment, the image conversion process S503, the error evaluation process S504, and the projection matrix updating process S505 are repeatedly performed until the output value in the error evaluation process S504 is converged. The amount of an error output in the error evaluation process S504 is evaluated in each execution. When the amount of an error is determined to have become extremely small, it is determined that the error has converged and the process is thus terminated. As described above, when the image conversion process S503, the error evaluation process S504, and the projection matrix updating process S505 are repeatedly performed, it is possible to match one of the two images corresponding to each common imaging area portion with the other image corresponding to the common imaging area portion. When a normal vector of the common imaging area is obtained therefrom, it becomes possible to join the images together without deviation, and further clarify the relationship between each camera and the plane. Thus, it is possible to realize generation of a bird's-eye image from a plurality of camera images.

Although a plurality of images are joined together to become an image seen from above in the aforementioned process, how much distance the size of one pixel corresponds to is unknown, and the size of the pixel is thus not corrected. Thus, the scale correction process S509 is performed to correct the size of the pixel. In the scale correction process S509, distance information about the gap between calibration patterns, which has been measured by an operator or the like and input via the input device 106, is used to correct the camera parameters, so that a final bird's-eye image is generated. As the process, how many pixels the gap between calibration patterns should look in the bird's-eye image is calculated, and the camera parameters are corrected so that the gap between the calibration patterns in the bird's-eye image becomes the actually calculated pixel gap. Calibration of the cameras can be realized through the aforementioned process.

It should be noted that the present invention is not limited to the aforementioned embodiments, and includes a variety of variations. For example, although the aforementioned embodiments have been described in detail to clearly illustrate the present invention, the present invention need not include all of the configurations described in the embodiments. It is possible to replace a part of a configuration of an embodiment with a configuration of another embodiment. In addition, it is also possible to add, to a configuration of an embodiment, a configuration of another embodiment. Further, it is also possible to, for a part of a configuration of each embodiment, add/remove/substitute a configuration of another embodiment.

In addition, control lines and information lines represent those that are considered to be necessary for the description, and do not necessarily represent all control lines and information lines that are necessary for a product. Thus, in practice, almost all configurations may be considered to be mutually connected.

### Reference Signs List

- 1: Vehicle
- 100: Camera calibration system
- 101: Imaging device
- 102: Camera interface
- 103: Arithmetic unit
- 104: Image storage device (RAM)
- 105: Parameter storage device (ROM)
- 106: Input device
- 107: Display device
- 108: Camera calibration device
- 109: Composite image generation device
- 111-114: Camera
- 141: Image conversion unit
- 142: Error evaluation unit
- 143: Projection matrix updating unit
- 144: Calibration unit
- 145: Camera parameter calculation unit
- P1-P16: Calibration pattern
- R: Calibration target
- RK1-RK4: Common imaging area
- S501: Image acquisition process
- S502: Initial projection matrix generation process
- S503: Image conversion process
- S504: Error evaluation process
- S505: Projection matrix updating process
- S506: Update amount calculation process
- S507: Projection matrix calculation process
- S508: Convergence determination process
- S509: Scale correction process

## Claims

1. A camera calibration device for calibrating a plurality of cameras, which are mounted on a vehicle, configured to capture images of areas around the vehicle including a ground, and have a common imaging area, using at least three calibration patterns that are arranged in the common imaging area, the camera calibration device comprising:
an image conversion unit configured to convert an image captured by each camera into an image of a bird's-eye viewpoint based on a predetermined projection matrix;
an error evaluation unit configured to calculate an error between a converted image of the calibration patterns captured by a predetermined camera of the plurality of cameras and a converted image of the calibration patterns captured by another camera that shares the common imaging area with the predetermined camera;
a projection matrix updating unit configured to update the predetermined projection matrix based on the error;
a distance information input unit configured to receive information on a distance between two given calibration patterns of the calibration patterns; and
a camera parameter calculation unit configured to decompose the projection matrix in which the error calculated by the error evaluation unit becomes zero into a normal vector to the ground in each of the converted images and a relative external parameter of each camera, and calculate camera parameters including an external parameter related to a posture of each camera with respect to the ground from the normal vector to the ground, the relative external parameter of each camera, and the information on the distance received by the distance information input unit.

2. The camera calibration device according to claim 1, further comprising a rotation amount input unit configured to receive a relative rotation amount of the vehicle with respect to the ground, wherein the camera parameter calculation unit is configured to calculate the camera parameters by taking into consideration the rotation amount received by the rotation amount input unit.

3. A camera calibration device for calibrating a plurality of cameras, which are mounted on a vehicle, configured to capture images of areas around the vehicle including a ground, and have a common imaging area, using feature points of an object that is present in the common imaging area, the camera calibration device comprising:
an image conversion unit configured to convert an image captured by each camera into an image of a bird's-eye viewpoint based on a predetermined projection matrix;
an error evaluation unit configured to calculate an error between a converted image of the object captured by a predetermined camera of the plurality of cameras and a converted image of the object captured by another camera that shares the common imaging area with the predetermined camera;
a projection matrix updating unit configured to update the predetermined projection matrix based on the error;
a distance information input unit configured to receive information on a distance between two given points of the object; and
a camera parameter calculation unit configured to decompose the projection matrix in which the error calculated by the error evaluation unit becomes zero into a normal vector to the ground in each of the converted images and a relative external parameter of each camera, and calculate camera parameters including an external parameter related to a posture of each camera with respect to the ground from the normal vector to the ground, the relative external parameter of each camera, and the information on the distance received by the distance information input unit.

4. The camera calibration device according to claim 3, further comprising a rotation amount input unit configured to receive a relative rotation amount of the vehicle with respect to the ground, wherein the camera parameter calculation unit is configured to calculate the camera parameters by taking into consideration the rotation amount received by the rotation amount input unit.

5. A camera calibration method for calibrating a plurality of cameras, which are mounted on a vehicle, configured to capture images of areas around the vehicle including a ground, and have a common imaging area, using at least three calibration patterns that are arranged in the common imaging area, the camera calibration method comprising:
converting an image captured by each camera into an image of a bird's-eye viewpoint based on a predetermined projection matrix;
calculating an error between a converted image of the calibration patterns captured by a predetermined camera of the plurality of cameras and a converted image of the calibration patterns captured by another camera that shares the common imaging area with the predetermined camera;
updating the predetermined projection matrix based on the error; and
decomposing the projection matrix in which the error becomes zero into a normal vector to the ground in each of the converted images and a relative external parameter of each camera, and calculating camera parameters including an external parameter related to a posture of each camera with respect to the ground from the normal vector to the ground, the relative external parameter of each camera, and information on a distance between two given calibration patterns of the calibration patterns.

6. A camera calibration method for calibrating a plurality of cameras, which are mounted on a vehicle, configured to capture images of areas around the vehicle including a ground, and have a common imaging area, using a feature object that is present in the common imaging area, the camera calibration method comprising:
converting an image captured by each camera into an image of a bird's-eye viewpoint based on a predetermined projection matrix;
calculating an error between a converted image of the feature object captured by a predetermined camera of the plurality of cameras and a converted image of the feature object captured by another camera that shares the common imaging area with the predetermined camera;
updating the predetermined projection matrix based on the error; and
decomposing the projection matrix in which the error becomes zero into a normal vector to the ground in each of the converted images and a relative external parameter of each camera, and calculating camera parameters including an external parameter related to a posture of each camera with respect to the ground from the normal vector to the ground, the relative external parameter of each camera, and information on a distance between two given points of the feature object.
